# EUROPEAN PATENT SPECIFICATION

(11) **EP 0 892 971 B1**
(45) Date of publication and mention of the grant of the patent: **07.11.2007**
(21) Application number: 95943982.9
(22) Date of filing: 18.12.1995
(51) Int. Cl.: G08C 21/00, G06F 3/042

(54) **ABSOLUTE OPTICAL POSITION DETERMINATION**
BESTIMMUNG DER ABSOLUTEN OPTISCHEN POSITION
DETERMINATION OPTIQUE DE LA POSITION ABSOLUE

(43) Date of publication of application: 27.01.1999
(73) Proprietor: Anoto AB, 223 70 Lund (SE)
(72) Inventor: Sekender, Oral, Chicago IL 60614-2810 (US)
(74) Representative: Perklev, Karin Cecilia
(86) International application number: PCT/US1995/016913
(87) International publication number: WO 1997/022959

(56) References cited:
- EP-A- 0 362 970
- EP-A- 0 407 734
- WO-A-92/17859
- US-A- 4 572 952
- US-A- 4 712 100
- US-A- 5 051 736
- US-A- 5 128 526
- US-A- 5 214 426

## Description

This invention relates generally to an apparatus for generating absolute position related computer data from obtaining and outputting the instantaneous position and/or movement of a moveable element on a data surface, such as might be used for determining the position and/or movement of a pen/pencil on paper. In addition, this invention will allow the user to input graphical information (e.g.. drawings or handwriting) and simultaneously provide an original hard copy of the information.

An apparatus according to the preamble of claim 1 is known from WO-A-92/17859.

Further, the following United States Patents are believed to be closely related to the present invention:

| U.S. Pat Nos.: | | | |
|---|---|---|---|
| 5,086,197 | 5,075,558 | 5,075,541 | 5,051,736 |
| 5,009,277 | 4,975,546 | 4,885,433 | 4,853,496 |
| 4,845,684 | 4,809,351 | 4,806,707 | 4,804,949 |
| 4,751,741 | 4,532,376 | 4,364,035 | 4,141,073 |

Many attempts have been made to determine the position of an object on a data surface in the form of computer data. Both two-dimensional and three-dimensional position determining devices now exist for inputting graphical data such as handwritten text, symbols, drawings, and so on. These devices determine the absolute position and/or movement of a stylus on a data surface by converting the position information into coordinates.

The use of a writing tablet and a stylus is common for inputting hand written data. Most two-dimensional devices require contact between the writing tablet and stylus. Three-dimensional devices usually do not require contact. They normally use a form of wave energy such as light, electromagnetic, or sonic energy.

Generally, two relationships exist between the stylus and the writing tablet. The passive stylus/active tablet utilizes a passive stylus interfacing with an active receiving surface (e.g., resistive and capacitive methods), while the active stylus/passive tablet utilizes an active stylus interfacing with a passive surface (e.g., optical, acoustic, tactile, or electromagnetic). A third method using a mechanical linkage such as a pantograph is rarely used.

The passive stylus/active surface method has some significant shortcomings. The most significant is the active surface or tablet itself Besides being complex, large, heavy, cumbersome and difficult to transport, the tablet is expensive. Further, the tablet cannot usually distinguish between the stylus and another object pressing on it Still further, active tablets are difficult to manufacture, subject to interference from outside factors, and have complex mechanical and electrical parts that are subject to malfunction.

The active stylus/passive surface method also has major drawbacks. Most significantly, this method generally requires an awkward tablet besides a separate transmitter and receiver (usually in different locations). Further, the transmitted signal can become obscured before reaching the receiver.

Another class of active stylus/passive surface devices provides relative position information. An example is the computer mouse that includes the mechanical mouse comprising a ball rolling on a surface, and the optical mouse comprising a surface with grid lines and an optical input means within the mouse.

Both the passive stylus/active surface and active stylus/passive surface methods have the feeling of being unnatural and require a significant interface adjustment for the user from the conventional pen/pencil and paper. The amount and accuracy of information provided by these methods are limited. In addition, some of these methods require a physical connection between the stylus and the tablet All the methods provide two-dimensional information. Some provide three-dimensional information. Further, they may provide one or more, but not all the following information: displacement, rotation, angle to tablet, and velocity. None provide all of this information.

A significant advantage of the present invention is its interface. Overall, no matter how good a computer interface is, less of it would be better. The present invention allows for an interface that is almost identical to that of a pen/pencil and paper. The present invention is used in the same manner as a pen/pencil and paper and all of the computing is done in the background unnoticed by the user. The present invention turns an ordinary pen/pencil and paper into a powerful computer. The pen/pencil and paper are familiar and comfortable interfaces to the user. If the user is comfortable with the pen/pencil and paper then the user will be very comfortable with the present invention.

As part of output, the aforementioned methods can provide a printed hard copy, but they do not provide an original hard copy as part of the input. In the present invention, the information is input, analyzed, then output Since the present invention teaches obtaining coordinate information by scanning a surface and simultaneously placing information on the surface by writing on the surface with a stylus, an original hard copy is produced as part of the input by writing or drawing on the surface.

### Objects and Advantages

It is an object of the present invention to provide all of the aforementioned information.

It is an object of the present invention to overcome all of the aforementioned disadvantages.

It is an object of the present invention to provide an apparatus for obtaining and outputting the absolute position and/or movement of a moveable element on a data surface.

It is an object of the present invention to provide an apparatus for obtaining and outputting the absolute position and/or movement of a moveable element on a data surface for acquisition and output of hand written data

It is an object of the present invention to provide an apparatus that most closely resembles using pen/pencil and paper.

It is an object of the present invention to provide an apparatus producing an original hard copy of data as part of the input process of writing on a surface.

It is an object of the present invention to provide an apparatus of the character described in which the absolute position and/or movement of the movable element can be precisely determined relative to a fixed reference.

It is an object of the present invention to provide an apparatus for hand held use.

It is an object of the present invention to provide an apparatus comprising the aforementioned movable element in the shape of a stylus.

It is an object of the present invention to provide an apparatus of the character described which does not require the use of a special digitizing tablet.

It is an object of the present invention to provide an apparatus of the character described which does not require the use of a special transmitter.

It is an object of the present invention to provide an apparatus of the character described which can use a writing surface such as paper formatted with a position-related coding means for indicating X-Y coordinates.

It is an object of the present invention to provide an apparatus of the character described which can use a writing surface such as paper formatted with a position-related coding means for indicating X-Y coordinates by the stylus at the time of use.

It is an object of the present invention to provide an apparatus for obtaining and outputting the position and/or movement of a moveable element on a data surface comprising: a writing surface formatted with a position-related coding means for indicating X-Y coordinates, an optical data input means or detector means, a data processing means, and a data output means.

It is an object of the present invention to provide an apparatus for precisely locating the absolute position and/or movement of a movable element within a plane. More particularly, it is an object of the invention to provide an apparatus for use with a computer that includes a movable element, whose absolute position and/or movement within a plane can be determined with or without a physical connection between the movable element and the plane.

It is an object of the present invention to provide an apparatus for handwriting recognition.

It is an object of the present invention to provide an apparatus for optical character recognition (OCR).

It is an object of the present invention to provide an apparatus for signature verification.

It is an object of the present invention to provide an apparatus for handwriting verification.

It is an object of the present invention to provide an apparatus for finger print recognition.

It is an object of the present invention to provide an apparatus for graphical recognition.

It is an object of the present invention to provide an apparatus for graphical input.

It is an object of the present invention to provide an apparatus for forms processing.

It is an object of the present invention to provide an apparatus for converting optically input data into coordinate data.

It is an object of the present invention to provide an apparatus for formatting a writing surface with coordinate data.

It is an object of the present invention to provide an apparatus for providing digital data.

It is an object of the present invention to provide an apparatus for digitizing optical data.

According to the invention, there is provided an apparatus as defined in claim 1. According to an embodiment of the invention, a data surface may be provided that is made of a material selected from the group consisting of paper, plastic, glass, metal, synthetic fiber, synthetic material, natural material, and a paper like substance.

### Description of Drawings

- Fig. 1: is an example of a coding means using dots.
- Fig. 1a: is an enlarged view of the coding means in Fig. 1.
- Fig. 2: is an.example of dots representing coordinates.
- Fig. 3: is an example of written text on a coded writing surface of dots.
- Fig. 4: is an example of a coding means using bar codes.
- Fig. 4a: is an enlarged view of the coding means in Fig. 4.
- Fig. 5: is an example of a coding means using checkerboard-like cubes.
- Fig. 5a: is an enlarged view of the coding means in Fig. 5.
- Fig. 6: is a perspective view of an embodiment using an image conduit and a PC board
- Fig. 7: is a perspective view of an embodiment using a self-contained stylus.

### Reference Numerals in Drawings

| | | | |
|---|---|---|---|
| 1 | coded surface | 2 | dot |
| 3 | quadrant of dot | 4 | center circle |
| 5 | inner ring | 6 | outer ring |
| 7 | ring slices | 8 | optical conduit |
| 9 | writing element | 10 | pressure switch |
| 11 | manual switch | 12 | lens or light filter |
| 13 | CCD | 14 | electronic interface |
| 15 | cable | 16 | PC board |
| 17 | light source | 18 | protective casing |
| 19 | optical element | 20 | lens |
| 21 | microcomputer | 22 | touch screen display |
| 23 | function keys | 24 | wireless transceiver |
| 25 | pen/pencil clip | | |

### Description of Preferred Embodiments

The present invention aims to overcome the aforementioned disadvantages and to provide a system that most closely emulates the use of pen/pencil and paper.

Accordingly, the present invention proposes the use of a data surface or more particularly a writing surface such as paper, formatted with a position-related coding means for indicating X-Y coordinates - capable of reflecting a frequency of light The stylus or pen/pencil has a light source of a frequency for illuminating the surface. The frequency(s) of light is absorbed by the surrounding writing surface but reflected by the coding means into the stylus onto a charge-coupled device (CCD) or detector within the stylus. An output signal from the CCD or array of light sensitive elements is sent to a computer or processor for processing and finally output to the user. The output can be in various forms including an image on a computer display or a computer printout

The frequency(s) of light to be used depends on the application. For example, infrared light and light reflecting means can be used for hand writing or drawing on paper. Infrared light is invisible to the user and thus does not interfere with the hand-formed images. The position related coding reflects the selected frequency of light and the detector picks up the selected frequency of light.

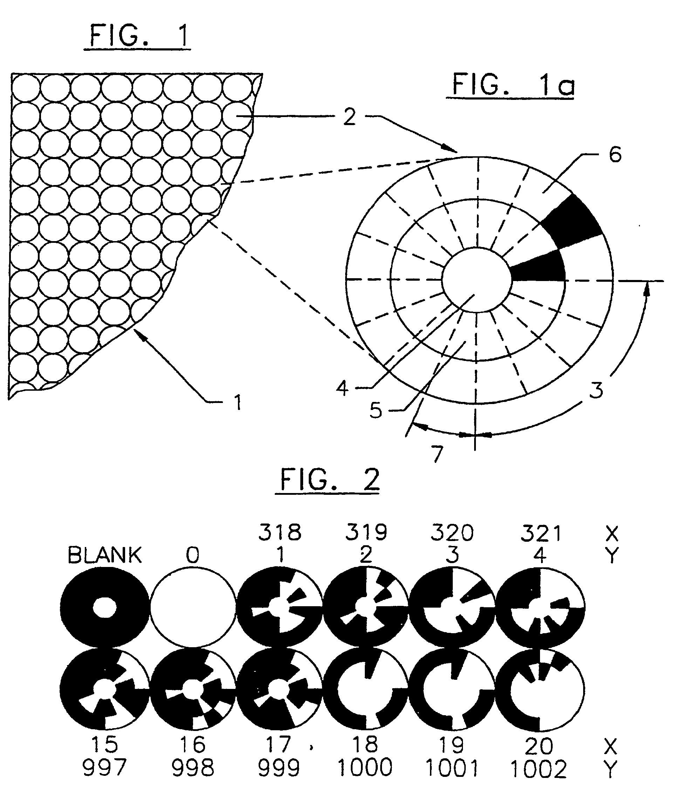

One embodiment comprises a writing surface systematically coded with a plurality of dots **1 in Fig. 1** designating coordinates. A sample dot **2 in Fig. 1a** is divided into three concentric circles partitioned into quadrants **3 in Fig. 1a.** The center circle **4 in Fig. 1a** forms a small circle, while the other circles form the inner **5 in Fig. 1a** and outer **6 in Fig. 1a** rings. Each quadrant of each ring represents a digit of a four-digit number and is further divided into four equal slices **7 in Fig. 1a**. The upper right quadrant of each ring is the first digit moving clockwise. The outer ring represents the X coordinate and the inner ring represents the Y coordinate. A combination of dark and light slices in the rings of each dot indicates an X-Y coordinate in **Fig. 2.** The center dot may be used for additional data. For example, a combination of light and dark slices of the center dot can indicate moving the decimal point of the X-Y coordinate the desired number of digits to the right, thus substantially increasing the number of possible coordinates.

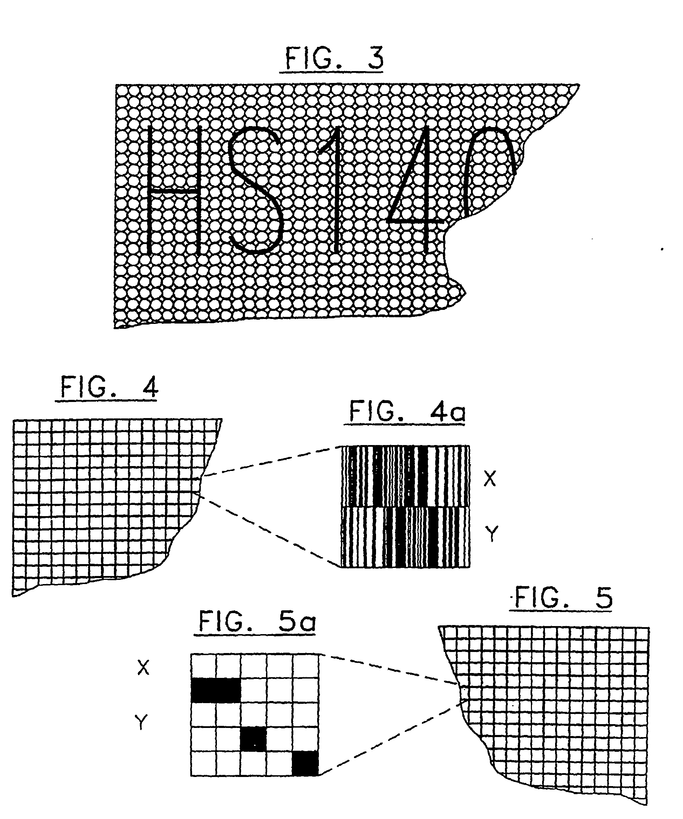

The process of writing or drawing as illustrated in **Fig. 3** on the writing surface causes coordinates to be scanned, input, analyzed, and output. Thus, the path of the stylus and, more particularly, the writing tip is determined. Well-known techniques such as interpolation, extrapolation, and triangulation may be used to help determine the path of the stylus.

Position-related coding means not comprising a plurality of dots are a bar code system shown in **Fig**. **4** and **Fig. 4a** or a system of checkerboard-like cubes shown in **Fig. 5** and **Fig. 5a.**

As well, the means for formatting comprises any means for imposing coordinates onto a surface, including (1) printing the writing surface with coordinate codes using any means that reflects only the desired wavelength of light, (2) overlaying a writing surface with carbon paper, film, template, plate, or the like comprising the coordinate code whereby the code reflects the desired wavelength of light, or overlaying a surface with at least one coding means reflecting the desired wavelength of light and/or pattern to be scanned, and (3) formatting the writing surface by writing or drawing on it while scanning, then using the hand formed graphical information as points of reference.

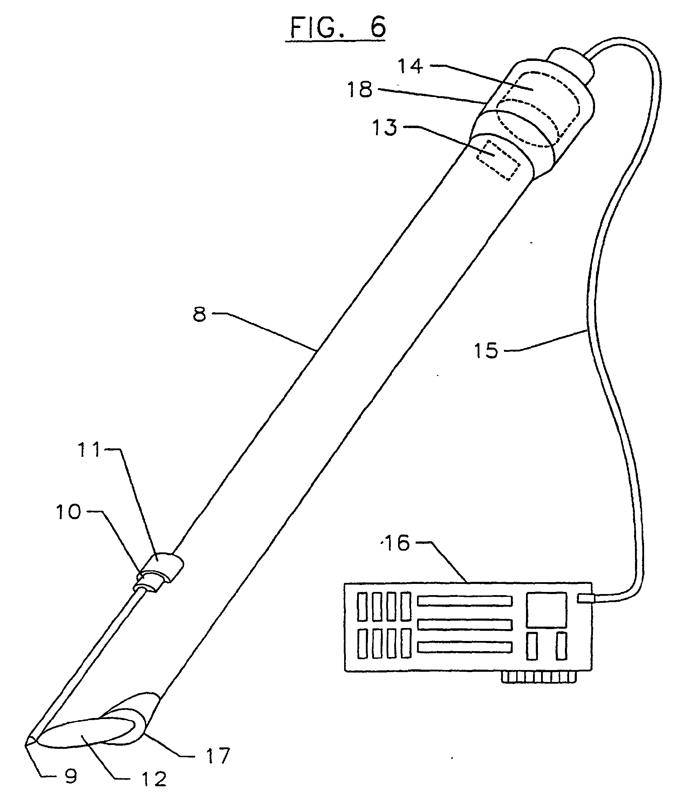

In a first embodiment, the stylus is composed of a pen-shaped optical conduit **8 in Fig. 6**. At the lower scanning end is a replaceable and/or retractable writing element **9 in Fig. 6** connected to a pressure sensitive on/off switch **10 in fig. 6**. A manual override on/off switch **11 in Fig. 6** is provided. The scanning end is angled at 45 degrees away from the writing element to be generally level with the writing surface and is optically formed to read close to the surface. The stylus can scan with the writing element enabled or retracted. Optionally, the scanning end comprises a lens, lens shade, and/or light filter **12 in Fig. 6** and the stylus can scan at various distances depending on the lens used. The stylus can scan and write simultaneously, scan only when the writing element is retracted, write only when the scanning feature is not activated, or scan in all modes, depending on the function selected.

The upper end of the stylus comprises a CCD **13 in Fig. 6** facing down toward the scanning end. Connected to the CCD is an interface means **14 in Fig. 6** for interfacing the CCD to the cable **15 in Fig. 6**. The cable in turn is connected to a PC board **16 in Fig. 6** placed inside a personal computer. The light source **17 in Fig. 6** is optionally placed at the upper or lower end of the stylus. Wires connect the electronic components. The upper end of the stylus is enclosed with a protective casing **18 in Fig. 6.**

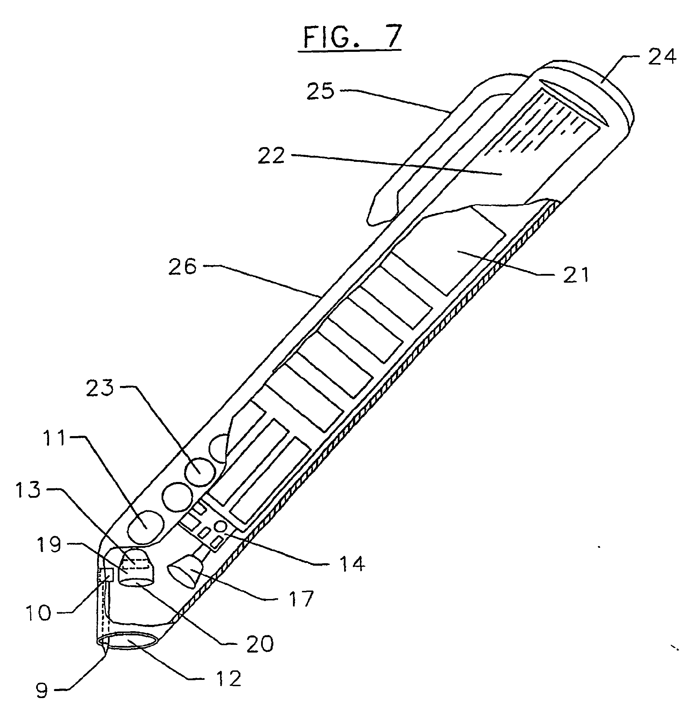

A second embodiment comprises the aforementioned writing surface and a self-contained pen-shaped stylus. The stylus includes a replaceable and retractable writing element **9 in Fig. 7** at the lower end connected to a pressure sensitive on/off switch **10 in fig. 7**. A manual override on/off switch **11 in Fig. 7** is provided. The scanning end is open and angled at 45 degrees away from the writing element to be generally level with the writing surface. Inside the stylus above the opening is the optical element **19 in Fig. 7**, optically formed to read close to the surface. The stylus can scan with the writing element enabled or retracted. At the bottom of the optical element is a lens, lens shade, and/or light filter **20 in Fig. 7**. optionally, the scanning end comprises an interchangeable lens, lens shade, and/or light filter **12 in Fig. 7.** The CCD **13 in Fig. 7** is within the optical element. A microcomputer **21 in Fig. 7** is within the stylus. An interface means **14 in Fig. 7** interfaces the CCD and other components to the microcomputer. The light source **17 in Fig. 7** is placed at the lower end within the stylus near the optical element. Wires interface the various components. On the side is a touch screen display **22 in Fig. 7.** Function keys **23 in Fig. 7** are near the lower end of the stylus below the touch screen. On the upper end is a wireless transceiver **24 in Fig. 7** for communicating with other devices. Optionally, a pen clip **25 in Fig. 7** is near the upper end.

During the process of writing, the writing surface is scanned of coordinates whereby the light is reflected from the surface, and onto the CCD. Data from the CCD is sent to the micro processor for analysis, and finally output onto a screen.

## Claims

1. An apparatus for obtaining and outputting the position and movement of a moveable element on a coded surface (1; 30; 31; 32) comprising:
- said coded surface coded with at least one position-related coding means (1) for indicating X-Y coordinates;
- a data input means (13) for obtaining position-related data from said at least one position-related coding means;
- a data output means (14) for outputting position-related data;
- a data processing means (16; 21) for obtaining and analysing position related data from said data output means;
- writing means (9) for writing visibly on said coded surface, said writing means being housed for movement together with said data input means relative to said coded surface, thereby to provide an original hard copy corresponding to the data output by said data output means;
**characterised in that**
said at least one coding means comprises a plurality of dots for providing digital data whereby the absolute position and/or movement of said moveble element within a plaine can be determined, whereby each dot separately and digitally codes the x-position and the y-position.

2. An apparatus according to Claim I wherein:
- said data input means is a detector comprising an array of light sensitive elements (13) for detecting said position-related coding means; and
- said data processing means comprises means for receiving and processing position related data from said data output means, thereby to determine the position of said data input means relative to said coded surface.

3. An apparatus according to Claim 1 or 2 wherein:
- said apparatus comprises means for determining the path of said movable element by detecting a sequence of coordinates of a plurality of points in the path of said movable element.

4. An apparatus according to any preceding Claim comprising means for analyzing the path of said moveable element.

5. An apparatus according to any preceding Claim comprising an optical stylus (27) including a rod shaped fiber optic conduit body member (8).

6. An apparatus according to any of Claims 1 to 4 comprising an optical stylus (26; 27), said optical stylus comprising said data input means (13) and said data output means (14).

7. An apparatus according to any preceding Claim having the form of a self contained optical stylus (26) housing a microcomputer (21).

8. An apparatus according to any preceding Claim whereby each of said dots comprises three concentric circles partitioned into quadrants including a center circle (4), and an inner ring (5) and an outer ring (6) whereby the outer ring represents an X coordinate and the inner ring represents a Y coordinate;
- each quadrant (3) of the outer ring and the inner ring representing a digit of a four digit number and further comprising four equal slices (7) whereby the upper right quadrant of the outer ring and the inner ring represent the first digit of the four digit number moving clockwise, a combination of dark and light slices indicating an X-Y coordinate, and the center circle optionally representing additional code.

9. An apparatus according to any preceding Claim whereby said at least one position-related coding means (1; 2) comprises an optical image.

10. An apparatus according to any preceding Claim **characterized in that** said at least one position-related coding means (1; 2) is printed on said coded surface.

11. An apparatus according to any preceding Claim whereby said data processing means comprises a computer.

12. An apparatus according to any preceding Claim comprising reflecting means whereby a selected wavelength of light is reflected by said at least one position-related coding means (1; 2) and absorbed by the surrounding area of said coded surface.

13. An apparatus according to any preceding Claim **characterized by** a selective filtering means (12; 20) for selectively filtering at least one selected wavelength of light.

14. An apparatus according to any preceding Claim whereby said data input means (13) is adapted for selectively detecting said at least one position-related coding means using a selected wavelength of light.

15. An apparatus according to any preceding Claim whereby said data input means (13) comprises a stylus shaped detector means for hand held use.

16. An apparatus according to any of Claims 1 to 14 whereby said data input means (13) comprises a detector means suitable for hand held use.

17. An apparatus according to any preceding Claim whereby said coded surface comprises an overlay means (1; 30; 31; 32) for being overlaid on a surface; said at least one position-related coding means being selected from the group consisting of carbon paper, film, template, and plate.

## Patentansprüche

1. Vorrichtung zum Ermitteln und Ausgeben der Position und Bewegung eines beweglichen Elementes auf einer codierten Fläche (1; 30; 31; 32), die umfasst:
- die codierte Fläche, die mit wenigstens einer positionsbezogenen Codiereinrichtung (1) zum Anzeigen von X-Y-Koordinaten codiert ist;
- eine Dateneingabeeinrichtung (13), die positionsbezogene Daten von der wenigstens einen positionsbezogenen Codiereinrichtung ermittelt;
- eine Datenausgabeeinrichtung (14), die positionsbezogene Daten ausgibt;
- eine Datenverarbeitungseinrichtung (16; 21), die positionsbezogene Daten von der Datenausgabeeinrichtung ermittelt und analysiert;
- eine Schreibeinrichtung (9), die sichtbar auf der codierten Fläche schreibt, wobei die Schreibeinrichtung zur Bewegung zusammen mit der Dateneingabeeinrichtung relativ zu der codierten Fläche aufgenommen ist, um so einen Originalausdruck zu erzeugen, der den durch die Datenausgabeeinrichtung ausgegebenen Daten entspricht;
**dadurch gekennzeichnet, dass**
die wenigstens eine Codiereinrichtung eine Vielzahl von Punkten zum Erzeugen digitaler Daten umfasst, wobei die absolute Position und/oder Bewegung des beweglichen Elementes innerhalb einer Ebene bestimmt werden kann und jeder Punkt die x-Position sowie die y-Position separat und digital codiert.

2. Vorrichtung nach Anspruch 1, wobei:
- die Dateneingabeeinrichtung ein Detektor ist, der eine Anordnung lichtempfindlicher Elemente (13) umfasst, die die positionsbezogene Codiereinrichtung erfassen; und
- die Datenverarbeitungseinrichtung eine Einrichtung zum Empfangen und Verarbeiten positionsbezogener Daten von der Datenausgabeeinrichtung umfasst, um so die Position der Dateneingabeeinrichtung relativ zu der codierten Fläche zu bestimmen.

3. Vorrichtung nach Anspruch 1 oder 2, wobei:
- die Vorrichtung eine Einrichtung zum Bestimmen des Weges des beweglichen Elementes durch Erfassen einer Sequenz von Koordinaten einer Vielzahl von Punkten auf dem Weg des beweglichen Elementes umfasst.

4. Vorrichtung nach einem der vorangehenden Ansprüche, die eine Einrichtung zum Analysieren des Weges des beweglichen Elementes umfasst.

5. Vorrichtung nach einem der vorangehenden Ansprüche, die einen optischen Stift (27) umfasst, der ein stabförmiges Lichtleitfaser-Körperelement (8) enthält.

6. Vorrichtung nach einem der Ansprüche 1 bis 4, die einen optischen Stift (26; 27) umfasst, wobei der optische Stift die Dateneingabeeinrichtung (13) und die Datenausgabeeinrichtung (14) umfasst.

7. Vorrichtung nach einem der vorangehenden Ansprüche, die die Form eines in sich geschlossenen optischen Stiftes (26) hat, der einen Mikrocomputer (21) aufnimmt.

8. Vorrichtung nach einem der vorangehenden Ansprüche, wobei jeder der Punkte drei konzentrische Kreise umfasst, die in Quadranten unterteilt sind, die einen Mittelkreis (4), einen inneren Ring (5) und einen äußeren Ring (6) enthalten, wobei der äußere Ring eine X-Koordinate darstellt und der innere Ring eine Y-Koordinate darstellt;
- jeder Quadrant (3) des äußeren Rings und des inneren Rings eine Stelle einer vierstelligen Zahl darstellt und des Weiteren vier gleiche Scheiben (7) umfasst, wobei der obere rechte Quadrant des äußeren Rings und des inneren Rings die erste Stelle der vierstelligen Zahl darstellen und, sich im Uhrzeigersinn bewegend, eine Kombination dunkler und heller Scheiben, die eine X-Y-Koordinate anzeigen, und der Mittelkreis wahlweise zusätzlichen Code darstellt.

9. Vorrichtung nach einem der vorangehenden Ansprüche, wobei die wenigstens eine positionsbezogene Codiereinrichtung (1; 2) ein optisches Bild umfasst.

10. Vorrichtung nach einem der vorangehenden Ansprüche, **dadurch gekennzeichnet, dass** die wenigstens eine positionsbezogene Codiereinrichtung (1; 2) auf die codierte Fläche gedruckt ist.

11. Vorrichtung nach einem der vorangehenden Ansprüche, wobei die Datenverarbeitungseinrichtung einen Computer umfasst.

12. Vorrichtung nach einem der vorangehenden Ansprüche, die eine reflektierende Einrichtung umfasst, wobei eine ausgewählte Wellenlänge von Licht durch die wenigstens eine positionsbezogene Codiereinrichtung (1; 2) reflektiert und durch den umgebenden Bereich der codierten Fläche absorbiert wird.

13. Vorrichtung nach einem der vorangehenden Ansprüche, **gekennzeichnet durch** eine selektive Filtereinrichtung (12; 20), die selektiv wenigstens eine ausgewählte Wellenlänge von Licht filtert.

14. Vorrichtung nach einem der vorangehenden Ansprüche, wobei die Dateneingabeeinrichtung (13) zum selektiven Erfassen der wenigstens einen positionsbezogenen Codiereinrichtung unter Verwendung einer ausgewählten Wellenlänge von Licht eingerichtet ist.

15. Vorrichtung nach einem der vorangehenden Ansprüche, wobei die Dateneingabeeinrichtung (13) eine stiftförmige Detektoreinrichtung umfasst, die in Funktion in der Hand gehalten wird.

16. Vorrichtung nach einem der Ansprüche 1 bis 14, wobei die Dateneingabeeinrichtung (13) eine Detektoreinrichtung umfasst, die sich eignet, um sie in Funktion in der Hand zu halten.

17. Vorrichtung nach einem der vorangehenden Ansprüche, wobei die codierte Fläche eine Overlay-Einrichtung (1; 30; 31; 32) zum Auflegen auf eine Fläche umfasst und die wenigstens eine positionsbezogene Codiereinrichtung aus der Gruppe ausgewählt wird, die aus Karbonpapier, Folie, Schablone und Platte besteht.

## Revendications

1. Appareil pour obtenir et transmettre la position et le mouvement d'un élément mobile sur une surface codée (1 ; 30 ; 31 ; 32) comprenant :
- ladite surface codée, codée avec au moins un moyen de codage lié à la position (1) destiné à indiquer des coordonnées X-Y ;
- un moyen d'entrée de données (13) destiné à obtenir des données liées à la position de la part dudit au moins un moyen de codage lié à la position ;
- un moyen de sortie de données (14) destiné à fournir des données liées à la position ;
- un moyen de traitement de données (16 ; 21) destiné à obtenir et à analyser les données liées à la position provenant dudit moyen de sortie de données ;
- un moyen d'écriture (9) destiné à écrire visiblement sur ladite surface codée, ledit moyen d'écriture étant placé en vue d'un mouvement avec ledit moyen d'entrée de données, par rapport à ladite surface codée, afin de fournir une copie papier originale correspondant aux données fournies par ledit moyen de sortie de données ;
**caractérisé en ce que**
ledit au moins un moyen de codage comprend une pluralité de points matriciels destinés à fournir des données numériques, moyennant quoi la position absolue et/ou le mouvement dudit élément mobile sur un plan peut être déterminé(e), moyennant quoi chaque point matriciel code séparément et numériquement la position x et la position y.

2. Appareil selon la revendication 1, dans lequel :
- ledit moyen d'entrée de données est un détecteur comprenant un ensemble d'éléments sensibles à la lumière (13) destinés à détecter ledit moyen de codage lié à la position ; et
- ledit moyen de traitement de données comprend un moyen destiné à recevoir et à traiter les données liées à la position provenant dudit moyen de sortie de données, afin de déterminer ainsi la position dudit moyen d'entrée de données par rapport à ladite surface codée.

3. Appareil selon la revendication 1 ou 2, dans lequel :
- ledit appareil comprend un moyen destiné à déterminer le trajet dudit élément mobile en détectant une séquence de coordonnées d'une pluralité de points géométriques situés sur le trajet dudit élément mobile.

4. Appareil selon l'une quelconque des revendications précédentes, comprenant un moyen pour analyser le trajet dudit élément mobile.

5. Appareil selon l'une quelconque des revendications précédentes, comprenant un stylet optique (27) comprenant un élément de corps de conduit en fibre optique et en forme de tige (8).

6. Appareil selon l'une quelconque des revendications 1 à 4, comprenant un stylet optique (26 ; 27), ledit stylet optique comprenant ledit moyen d'entrée de données et ledit moyen de sortie de données (14).

7. Appareil selon l'une quelconque des revendications précédentes, ayant la forme d'un stylet optique indépendant (26) renfermant un micro-ordinateur (21).

8. Appareil selon l'une quelconque des revendications précédentes, moyennant quoi chacun desdits points matriciels comprend trois cercles concentriques partitionnés en quadrants comprenant un cercle central (4), et un anneau interne (5) et un anneau externe (6), moyennant quoi l'anneau externe représente une coordonnée X et l'anneau interne représente une coordonnée Y ;
- chaque quadrant (3) de l'anneau externe et de l'anneau interne représentant un chiffre d'un nombre à quatre chiffres et comprenant en outre quatre tranches égales (7), moyennant quoi le quadrant supérieur droit de l'anneau externe et de l'anneau interne représente le premier chiffre du nombre à quatre chiffres dans le sens des aiguilles d'une montre, une combinaison de tranches claires et sombres indiquant une coordonnée X-Y, et le cercle central représentant optionnellement un code supplémentaire.

9. Appareil selon l'une quelconque des revendications précédentes, moyennant quoi ledit au moins un moyen de codage lié à la position (1 ; 2) comprend une image optique.

10. Appareil selon l'une quelconque des revendications précédentes, **caractérisé en ce que** ledit au moins un moyen de codage lié à la position (1; 2) est imprimé sur ladite surface codée.

11. Appareil selon l'une quelconque des revendications précédentes, moyennant quoi ledit moyen de traitement de données comprend un ordinateur.

12. Appareil selon l'une quelconque des revendications précédentes, comprenant un moyen de réflexion, moyennant quoi une longueur d'onde de lumière sélectionnée est réfléchie par ledit au moins un moyen de codage lié à la position (1 ; 2) et absorbée par la zone environnante de ladite surface codée.

13. Appareil selon l'une quelconque des revendications précédentes, **caractérisé par** un moyen de filtrage sélectif (12 ; 20) destiné à filtrer sélectivement au moins une longueur d'onde de lumière sélectionnée.

14. Appareil selon l'une quelconque des revendications précédentes, moyennant quoi ledit moyen d'entrée de données (13) est adapté pour détecter sélectivement ledit au moins un moyen de codage lié à la position en utilisant une longueur d'onde de lumière sélectionnée.

15. Appareil selon l'une quelconque des revendications précédentes, moyennant quoi ledit moyen d'entrée de données (13) comprend un moyen de détection en forme de stylet destiné à être utilisé à la main.

16. Appareil selon l'une quelconque des revendications 1 à 14, moyennant quoi ledit moyen d'entrée de données (13) comprend un moyen de détection convenant pour être utilisé à la main.

17. Appareil selon l'une quelconque des revendications précédentes, moyennant quoi ladite surface codée comprend un moyen de superposition (1 ; 30 ; 31 ; 32) destiné à être superposé sur une surface ; ledit au moins un moyen de codage lié à la position étant sélectionné parmi le groupe consistant en du papier carbone, un film, un gabarit et une plaque.
